# EUROPÄISCHE PATENTANMELDUNG

(11) **EP 4 592 516 A1**
(43) Veröffentlichungstag der Anmeldung: **30.07.2025**
(21) Anmeldenummer: 25153027.5
(22) Anmeldetag: 21.01.2025
(51) Int. Cl.: F02K 3/06, F01D 5/12, F01D 9/04

(54) **MANTELSTROMTRIEBWERK MIT NIEDERDRUCKTURBINE**

(30) Priorität: 24.01.2024 DE 102024101944
(71) Anmelder: MTU Aero Engines AG, 80995 München (DE)
(72) Erfinder: Brettschneider, Markus, 80995 München (DE); Seiband, Roman, 80995 München (DE); Kufner, Petra, 80995 München (DE); Trübenbach, Jens, 80995 München (DE)

(57) **Zusammenfassung**

Die vorliegende Erfindung betrifft ein Mantelstromtriebwerk mit einer Niederdruckturbine mit mindestens vier Stufen, wobei zumindest eine der mindestens vier Stufen ein transsonisches Schaufelgitter aufweist.

## Beschreibung

### Technisches Gebiet

Die vorliegende Erfindung betrifft ein Mantelstromtriebwerk mit einer Niederdruckturbine.

### Stand der Technik

Der vorliegende Gegenstand richtet sich auf ein Mantelstromtriebwerk mit einer Niederdruckturbine, deren Schaufelkränze typischerweise über ein Getriebe an einen Fan gekoppelt sind. Ein solches Triebwerk wird auch als *geared turbo fan*-Triebwerk bezeichnet (GTF-Triebwerk). Im Betrieb dreht der Fan, übersetzt durch das Getriebe, mit einer im Verhältnis zur Niederdruckturbine (gelegentlich auch als "Niederdruckturbinenmodul" bezeichnet) geringeren Drehzahl. Als Niederdruckturbine wird vorliegend jener Abschnitt der Fluggasturbine des Mantelstromtriebwerks bezeichnet, der einem stromaufwärtigsten Turbinenmodul, das der Brennkammer direkt nachgelagert ist, in Strömungsrichtung nachgelagert ist, d.h. auf letzteres folgt. Die Niederdruckturbine kann eine mittlere und/oder innerste Welle des Mantelstromtriebwerks antreiben.

### Darstellung der Erfindung

Der vorliegenden Erfindung liegt das technische Problem zugrunde, ein vorteilhaftes Mantelstromtriebwerk mit einer Niederdruckturbine anzugeben.

Dies wird erfindungsgemäß mit dem Mantelstromtriebwerk gemäß Anspruch 1 gelöst. Dessen Niederdruckturbine weist dabei mindestens vier Stufen auf. Zumindest eine der mindestens vier Stufen weist ein transsonisches Schaufelgitter auf, also ein transsonisches Leitschaufelgitter und/oder ein einen transsonisches Laufschaufelgitter. Wie nachstehend im Detail diskutiert, kann als ein transsonisches Schaufelgitter hierbei bspw. ein Schaufelgitter bzw. Schaufelkranz verstanden werden, bei welchem in einer entlang des transsonischen Schaufelgitters definierten Schaufelpassage zumindest stellenweise Strömungsgeschwindigkeiten auftreten, welche größer oder gleich einer Schallgeschwindigkeit eines das transsonische Schaufelgitter im Betrieb durchströmenden Fluids sind.

Die transsonische Ausgestaltung der Niederdruckturbine kann bspw. Ausdruck einer veränderten bzw. optimierten Arbeitsaufteilung im Triebwerk sein, nämlich einer im Verhältnis stärker nach axial hinten (d.h. nach stromabwärts bezogen auf das Arbeitsgas) verlagerten Arbeitsleistung. In der Gesamtschau kann dies bei z. B. gleicher Gesamtarbeitsleistung einen Wirkungsgrad des Mantelstromtriebwerks erhöhen. Vereinfacht gesagt wird ein veränderter *work-split* innerhalb des Mantelstromtriebwerks von der Hochdruckturbine in die Niederdruckturbine erreicht, wobei trotz einer vergleichsweise kleinen Anzahl von Stufen in der Niederdruckturbine der Gesamtwirkungsgrad des Mantelstromtriebwerks erhöht wird. In der Folge werden jedoch die Strömungsgeschwindigkeiten in der Niederdruckturbine höher, weswegen diese mit einem oder mehreren transsonischen Schaufelgitter(n) vorgesehen wird.

Alternativ zu der Niederdruckturbine mit mindestens vier Stufen kann diese gemäß Anspruch 2 auch genau drei Stufen aufweisen. Dabei weisen zumindest zwei dieser drei Stufen jeweils ein transsonisches Schaufelgitter auf, also zumindest eines von einem transsonischen Laufschaufelgitter und einen transsonischem Leitschaufelgitter. Auch in diesem Fall wird die Arbeitsleistung (wie vorstehend erläutert) axial nach hinten verschoben und wird damit der Gesamtwirkungsgrad des Mantelstromtriebwerks erhöht, wobei die mindestens zwei transsonischen Schaufelgitter die infolgedessen höheren Strömungsgeschwindigkeiten berücksichtigen. Generell kann die transsonische Ausgestaltung eine Beeinflussung der Strömung reduzieren, also bspw. das am bzw. im Überschallbereich strömende Fluid dann nicht wesentlich zusätzlich beschleunigen oder verzögern (beides könnte nachteilig sein).

Bevorzugte Ausgestaltungen finden sich in den abhängigen Ansprüchen und der gesamten Offenbarung, wobei bei der Darstellung der Merkmale nicht immer im Einzelnen zwischen den unterschiedlichen Anspruchskategorien unterschieden wird.

Wird bspw. ein für einen bestimmten Betrieb ausgelegtes Mantelstromtriebwerk beschrieben, ist dies zugleich auf eine entsprechende Verwendung bzw. ein entsprechendes Verfahren zum Betreiben des Mantelstromtriebwerks zu lesen. Ferner beziehen sich Angaben zur Niederdruckturbine stets auch auf das Mantelstromtriebwerk mit einer entsprechenden Niederdruckturbine.

Sofern auf eine Durchströmung "im Betrieb" Bezug genommen wird, kann sich dies z. B. auf eine Auslegung unter *Takeoff*- oder insbesondere *Cruise*-Bedingung beziehen, also auf den *Aerodynamic Design Point* (ADP). Angaben wie "axial", "radial" und "umlaufend", sowie die zugehörigen Richtungen (Axialrichtung etc.), beziehen sich ohne ausdrücklich gegenteilige Angabe auf eine Mittelachse der Mantelstromtriebwerks, die bspw. mit einer Rotationsachse der Laufschaufelgitter zusammenfallen kann. Die Angaben "stromauf" und "stromab" beziehen sich auf eine Strömungsrichtung des Arbeitsgases, also des die Turbine durchströmenden Heißgases.

Bei einer bevorzugten Ausführungsform weist eine transsonische Schaufel des transsonischen Schaufelgitters eine Saugseitenfläche mit einem zumindest annähernd linearen Bereich auf, welcher in einer Schaufelschnittebene gesehen ein zumindest annähernd lineares Profil hat. Die Schaufelschnittebene ist hierbei orthogonal zu einer Fädelachse, welche sich als Verbindungslinie der Flächenschwerpunkte der Querschnittsprofile ergibt, wobei ein jeweiliger Flächenschwerpunkt in einer jeweiligen Schaufelschnittebene am jeweiligen Querschnittsprofil genommen wird. Mit dem zumindest annähernd linearen Profil kann bspw. eine Beeinflussung des an der Saugseitenfläche strömenden Fluids reduziert sein (keine zusätzliche Beschleunigung, aber auch keine Verzögerung).

Bei einer bevorzugten Ausführungsform erstreckt sich das zumindest annähernd lineare Profil in der Schaufelschnittebene über zumindest 10 %, bevorzugt 20 %, einer axialen Breite der transsonischen Schaufel (mögliche Obergrenzen können bspw. bei 60 %, 50 % oder 40 % oder 30% liegen). Die axiale Breite wird hierbei als axiale Sehnenlänge des Querschnittsprofils in der jeweiligen Schaufelschnittebene genommen.

Bei einer bevorzugten Ausführungsform erstreckt sich der zumindest annähernd lineare Bereich radial über zumindest 10 %, bevorzugt zumindest 20 %, besonders bevorzugt zumindest 30 % bzw. 40 %, einer radialen Länge der transsonischen Schaufel. Bei einem linearen Bereich mit einer sich über seine axiale Weite verändernden radialen Erstreckung wird hierbei seine maximale radiale Erstreckung zugrunde gelegt, welche z. B. am stromabwärtigen Ende des linearen Bereichs vorliegen kann. Im Detail können die radiale Erstreckung und radiale Länge dabei jeweils auf derselben Axialposition genommen werden, bspw. in einem zur Mittelachse senkrechten Schnitt. Sofern die Saugseitenfläche in diesem Schnitt anteilig auch eine Erstreckung in Umlaufrichtung hat (die Schaufel bspw. geneigt ist), wird dabei nur der jeweilige Radialanteil zugrunde gelegt.

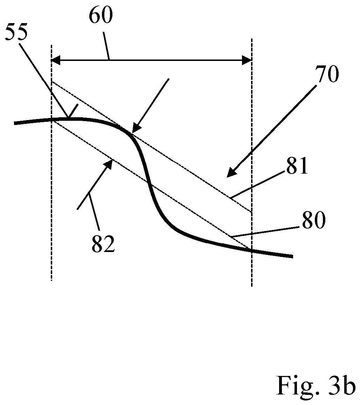

Bei einer bevorzugten Ausführungsform weist das zumindest annähernd lineare Profil in der Schaufelschnittebene gesehen eine Krümmung auf, welche um maximal 5 %, bevorzugt maximal 3 % bzw. maximal 2 %, besonders bevorzugt maximal 1 %, von einer Gerade abweicht. Zur Illustration und bezüglich weiterer Details wird auf das Ausführungsbeispiel verwiesen, siehe Figur 3b mit zugehöriger Beschreibung. Bevorzugt kann dieses maximale Krümmungskriterium jedenfalls auf radialen Schaufelblatthöhen zwischen 50 % und 90 % (0 % liegen radial innen, 100 % radial außen) in einer jeweiligen Schaufelschnittebene erfüllt sein. Im Rahmen technisch üblicher Genauigkeit kann das zumindest annähernd lineare Profil auch mit einer Geraden zusammenfallen (in der Schaufelschnittebene), also tatsächlich einer Geraden entsprechen. Generell kann das zumindest annähernd lineare Profil bspw. auf einen aufgrund der höheren Strömungsgeschwindigkeit saugseitig auftretenden Verdichtungsstoß abgestimmt sein, wobei der gerade Verlauf einer (weiteren) Beschleunigung oder auch Verzögerung des Fluids vorbeugen kann.

Bei einer bevorzugten Ausführungsform ist der lineare Bereich in der Schaufelschnittebene nächstbenachbart zu einem Hinterkantenradius bzw. einer Hinterkantenausrundung der transsonischen Schaufel angeordnet. Vereinfach zusammengefasst geht der lineare Bereich direkt in den Hinterkantenbereich über, läuft er also bspw. tangential an bzw. in den Hinterkantenradius.

Bevorzugt nimmt bei einer Ausgestaltung eine Gesamtfläche des linearen Bereichs nach stromab zu, wird also bspw. von Gitter zu Gitter bzw. Stufe zu Stufe der jeweilige lineare Bereich größer.

In bevorzugten Ausgestaltungen weisen mindestens oder genau zwei, mindestens oder genau drei oder mindestens oder genau vier Stufen der Niederdruckturbine ein transsonisches Schaufelgitter auf. Ferner weist die Niederdruckturbine in einer Ausgestaltung genau vier Stufen auf. Alternativ können genau drei Stufen vorgesehen sein und kann jede der drei Stufen ein transsonisches Schaufelgitter aufweisen.

Bei einer bevorzugten Ausführungsform sind die Leitschaufeln und/oder die Laufschaufeln nicht-gekühlte Schaufel. In anderen Worten weisen die Leit- und/oder Laufschaufel keine Kühlungs-Kanäle, Kühlungs-Aussparungen oder dergleichen auf, um die Temperatur der Schaufeln im Betrieb durch Fluid (zB Luft, Wasser oder andere Fluide) zu verringern.

Bei einer bevorzugten Ausführungsform ist das "aspect ratio" der (Leit- und/oder Lauf-)Schaufel, welches das Verhältnis der Höhe zur axialen Breite der (Leit- und/oder Lauf-)Schaufel definiert, größer gleich 5, bevorzugt größer gleich 4, besonders bevorzugt größer gleich 3,5. Dabei ist die Höhe der Schaufel der Abstand in Umfangsrichtung (i.e. um die Rotationsachse des Schaufelgitters) zwischen dem "obersten" und dem "untersten" Ende der Schaufel, und die axiale Breite der Abstand in Axialrichtung zwischen dem "vordersten" und dem "hintersten" Ende der Schaufel. Mit diesen Werten des "aspect ratios" entsprechen in ihrem Profil eher flache Schaufeln, im Gegensatz zu sehr gekrümmte Schaufeln, was eine verbesserte Kontrolle der Strömungssituation (Beschleunigung, Geschwindigkeit) ermöglicht.

Bei einer bevorzugten Ausführungsform ist die transsonische Ausgestaltung des Mantelstromtriebwerks so ausgelegt, dass zunächst nur das letzte, in anderen Worten das stromabwärts hinterste (Lauf-)Schaufelgitter ein transsonisches Schaufelgitter ist. Weiter können dann nach und nach die in Stromrichtung aufwärts direkt benachbarte, vorangehende, (Leit- und Lauf-)Schaufelgitter ebenfalls transsonisch sein. Somit könnten dann abwechselnd von Strom-Austrittsseite aus in Richtung Strom-Eintritt Lauf- und Leitschaufelgitter transsonisch sein. Die Erweiterung kann Schaufelgitter für Schaufelgitter erfolgen, oder direkt mehrere direkt benachbarte Schaufelgitter betreffen. Alternativ könnten nicht benachbarte (Leit- und/oder Lauf-)Schaufelgitter transsonisch ausgelegt sein.

Ferner betrifft die Erfindung eine Verwendung einer Niederdruckturbine in einem vorliegend beschriebenen Mantelstromtriebwerk, wobei das zumindest eine transsonische Schaufelgitter hierbei transsonisch durchströmt wird.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: einen schematischen Axialschnitt eines Mantelstromtriebwerks;
- Figur 2: in schematischer Darstellung einen Teil eines erfindungsgemäßen Hochdruckverdichters für ein Mantelstromtriebwerk;
- Figur 3a: einen Schnitt durch eine transsonische Schaufel eines transsonischen Schaufelgitters;
- Figur 3b: eine Detailansicht zu Figur 3a.

### Bevorzugte Ausführung der Erfindung

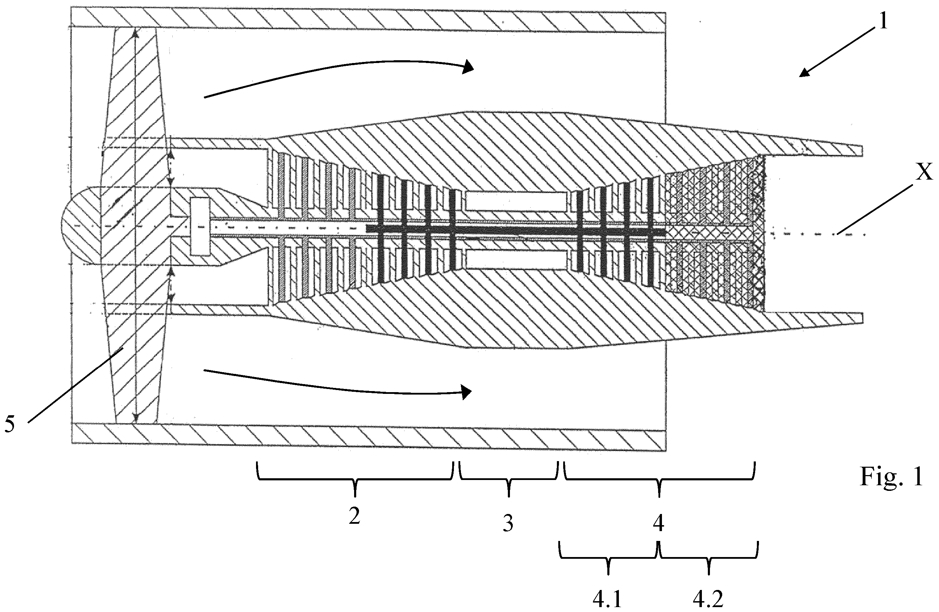

**Fig. 1** zeigt ein Mantelstromtriebwerk 1 in einem Axialschnitt entlang einer Mittelachse X. Es gliedert sich funktional in Verdichter 2, Brennkammer 3 und Turbine 4. In dem Verdichter 2 wird angesaugte Luft komprimiert. In der Brennkammer 3 wird Treibstoff, bspw. Kerosin, hinzugemischt und wird diese Mischung verbrannt. Das Heißgas wird in der Turbine 4, welche aus einer Hochdruckturbine 4.1 und einer Niederdruckturbine 4.2 aufgebaut ist, expandiert, wobei dem Heißgas anteilig Energie entzogen wird (über die Bewegung der Rotoren). Diese wird zum Antreiben der Rotoren der Verdichters 2 sowie des Fans 5 genutzt.

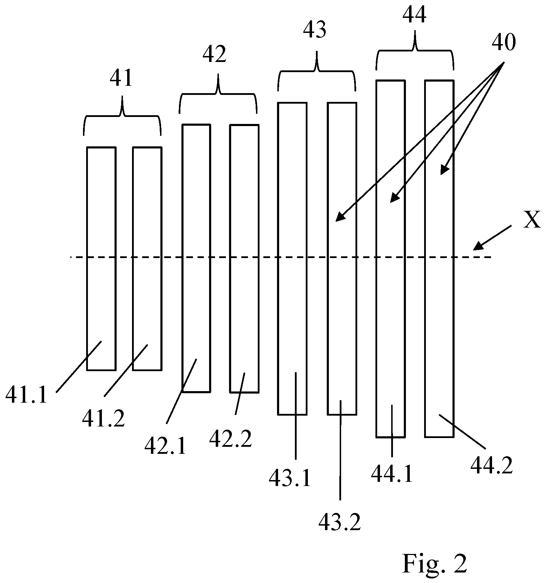

**Fig. 2** zeigt die Niederdruckturbine 4.2 in schematischer Darstellung, nämlich vorliegend vier Stufen 41-44; insgesamt ist die Niederdruckturbine 4.2 jedoch mindestens dreistufig aufgebaut. Zumindest eine der vier Stufen 41-44 weist dabei ein transsonisches Schaufelgitter 40 auf (vorliegend sind einige transsonische Gitter exemplarisch referenziert), bei dem es sich sowohl um ein Leitschaufelgitter 41.1, 42.1, 43.1, 44.1 als auch um ein Laufschaufelgitter 41.2, 42.2, 43.2, 44.2 handeln kann.

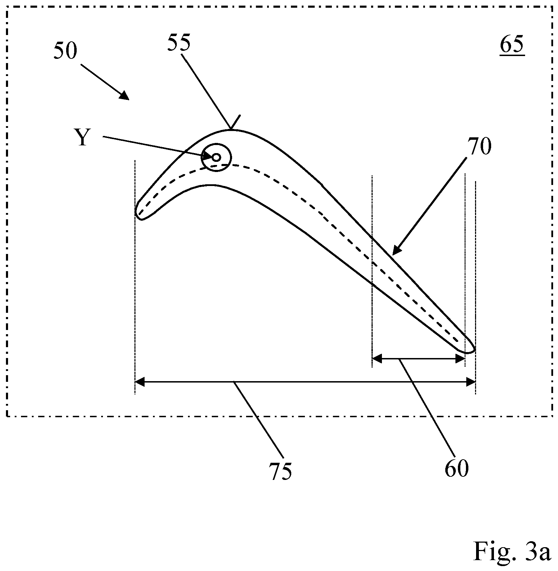

**Fig. 3a** zeigt einen Schnitt durch eine transsonische Schaufel 50 eines solchen transsonischen Schaufelgitters 40 in einer Schaufelschnittebene 65. Diese Schaufelschnittebene 65 liegt dabei orthogonal zu einer Fädelachse Y der transsonischen Schaufel 50, die einer Verbindungslinie der Flächenschwerpunkte entspricht.

Die transsonische Schaufel 50 wird im Betrieb von einem Fluid umströmt und weist eine Saugseite (Bereich oberhalb der transsonischen Schaufel 50 in Figur 3a) sowie eine Druckseite (Bereich unterhalb der transsonischen Schaufel 50 in Figur 3a) auf. Auf der Saugseite weist die transsonische Schaufel 50 eine Saugseitenfläche 55 mit einem zumindest annähernd linearen Bereich 60 auf. Dieser hat in der Schaufelschnittebene 65 betrachtet ein zumindest annähernd lineares Profil 70, also einen im Wesentlichen geraden Verlauf. Dieses zumindest annähernd lineare Profil 70 erstreckt sich vorliegend über rund 25 % einer axialen Breite 75 der transsonischen Schaufel 50.

Fig. **3b** zeigt eine Detailansicht zu Fig. 3a und illustriert das zumindest annähernd lineare Profil 70. Betrachtet wird wiederum ein zumindest annähernd linearer Bereich 60, der sich über 25 % der axialen Breite 75 erstreckt und dessen axial hinteres Ende im Übergang in die Hinterkantenkrümmung liegt. In dieser Schnittansicht ergibt sich eine erste Gerade 80 als Verbindungsgerade zwischen dem Anfangs- und Endpunkt, den die Saugseitenfläche 55 in dem zumindest annähernd linearen Bereich 60 hat. Eine zweite Gerade 81 ergibt sich als Tangente an die Saugseitenfläche 55, wobei diese Tangente parallel zu der ersten Gerade 80 liegt und solchermaßen an die Saugseitenfläche 55 gelegt ist, dass ein Abstand 82 zwischen den Geraden 80, 81 maximal wird.

Als "annähernd linearer Bereich" bzw. "annähernd lineares Profil" wird hierbei im Rahmen der vorliegenden Offenbarung ein Verlauf/Profil betrachtet, bei dem ein Quotient aus dem Abstand 82 zu der axialen Breite 75 (Abstand / axiale Breite) höchstens 5 %, in der Reihenfolge der Nennung höchstens 3 %, 2 % bzw. 1 % beträgt bzw. um höchstens diesen Wert von dem entsprechenden Quotienten von 0% eines linearen Verlaufs abweicht. Dabei muss diese im Wesentlichen geradlinige Erstreckung der Saugseitenfläche 55 nicht auf die 25 % der axialen Breite beschränkt sein, sondern kann bspw. sie auch weiter nach axial vorne reichen (der 25 %-Bereich wird aber für die Betrachtung der Linearität zugrunde gelegt und jedenfalls dort soll sie erfüllt sein).

Bevorzugt liegt die maximale Abweichung von 5 % (bzw. höchstens 3 %, 2 % oder 1 %) jedenfalls auf einer radialen Schaufelblatthöhe zwischen 50 % und 90 % vor. Hierbei kann das Kriterium der maximalen Abweichung aber zusätzlich auch radial innerhalb und/oder außerhalb dieses Intervalls (50 % - 90 %) erfüllt sein kann.

### BEZUGSZEICHENLISTE

| | |
|---|---|
| Mantelstromtriebwerk | 1 |
| Niederdruckturbine | 4.2 |
| transsonische(s) Schaufelgitter | 40 |
| Stufen | 41-44 |
| Leitschaufelgitter | 41.1-44.1 |
| Laufschaufelgitter | 41.2-44.2 |
| transsonische Schaufel | 50 |
| Saugseitenfläche | 55 |
| zumindest annähernd linearer Bereich (der Saugseitenfläche) | 60 |
| Schaufelschnittebene | 65 |
| zumindest annähernd lineares Profil (der Saugseitenfläche) | 70 |
| axiale Breite (der transsonischen Schaufel) | 75 |
| erste Gerade | 80 |
| zweite Gerade | 81 |
| Abstand zwischen den Geraden | 83 |

## Patentansprüche

1. Mantelstromtriebwerk (1) mit einer Niederdruckturbine (4.2), welche mindestens vier Stufen (41, 42, 43, 44) aufweist,
wobei zumindest eine der mindestens vier Stufen (41, 42, 43, 44) ein transsonisches Schaufelgitter (40) aufweist, also zumindest eines von einem transsonischen Leitschaufelgitter (41.1, 42.1, 43.1, 44.1) und einem transsonischen Laufschaufelgitter (41.2, 42.2, 43.2, 44.2).

2. Mantelstromtriebwerk (1) mit einer Niederdruckturbine (4.2), welche drei Stufen (41, 42, 43) aufweist,
wobei zumindest zwei der drei Stufen (41, 42, 43) jeweils ein transsonisches Schaufelgitter (40) aufweisen, also jeweils zumindest eines von einem transsonischen Leitschaufelgitter (41.1, 42.1, 43.1, 44.1) und einem transsonischen Laufschaufelgitter (41.2, 42.2, 43.2, 44.2).

3. Mantelstromtriebwerk (1) nach einem der Ansprüche 1 oder 2, bei welchem in einer entlang des transsonischen Schaufelgitters (40) definierten Schaufelpassage zumindest stellenweise Strömungsgeschwindigkeiten auftreten, welche größer oder gleich einer Schallgeschwindigkeit eines das transsonische Schaufelgitter (40) im Betrieb durchströmenden Fluids sind.

4. Mantelstromtriebwerk (1) nach einem der vorstehenden Ansprüche, bei welchem eine transsonische Schaufel (50) des transsonischen Schaufelgitters (40) eine Saugseitenfläche (55) mit einem zumindest annähernd linearen Bereich (60) aufweist, welcher in einer Schaufelschnittebene (65) gesehen ein zumindest annähernd lineares Profil (70) hat.

5. Mantelstromtriebwerk (1) nach Anspruch 4, bei welchem sich das zumindest annähernd lineare Profil (70) in der Schaufelschnittebene (65) über zumindest 10 % einer axialen Breite (75) der transsonischen Schaufel (50) erstreckt.

6. Mantelstromtriebwerk (1) nach Anspruch 4 oder 5, bei welchem sich der zumindest annähernd lineare Bereich (60) radial über zumindest 10 % einer radialen Länge (Lᵣ) der transsonischen Schaufel (50) erstreckt.

7. Mantelstromtriebwerk (1) nach einem der Ansprüche 4 bis 6, wobei das zumindest annähernd lineare Profil (70) in der Schaufelschnittebene (65) gesehen eine Krümmung aufweist, welche um maximal 5 % von einem linearen Verlauf abweicht.

8. Mantelstromtriebwerk (1) nach einem der Ansprüche 4 bis 7, bei welchem der zumindest annähernd lineare Bereich (60) in der Schaufelschnittebene (65) nächstbenachbart zu einem Hinterkantenradius oder einer Hinterkantenausrundung der transsonischen Schaufel (50) angeordnet ist.

9. Mantelstromtriebwerk (1) nach einem der Ansprüche 4 bis 8, mit einer Mehrzahl transsonischen Schaufelgittern (40), die jeweils eine transsonische Schaufel (50) mit einem zumindest annähernd linearen Bereich (60) aufweisen, wobei eine jeweilige Gesamtfläche des jeweiligen linearen Bereichs (60) von Schaufelgitter (40) zu Schaufelgitter (40) nach stromabwärts zunimmt.

10. Mantelstromtriebwerk (1) nach einem der vorstehenden Ansprüche, sofern nicht auf Anspruch 2 bezogen, bei welchem mindestens oder genau zwei Stufen (41, 42), mindestens oder genau drei Stufen (41, 42, 43) oder mindestens oder genau vier Stufen (41, 42, 43, 44) der Niederdruckturbine (4.2) ein transsonisches Schaufelgitter (40) aufweisen.

11. Mantelstromtriebwerk (1) nach einem der vorstehenden Ansprüche, sofern nicht auf Anspruch 2 bezogen, bei welchem die Niederdruckturbine (4.2) genau vier Stufen (41, 42, 43, 44) aufweist.

12. Mantelstromtriebwerk (1) nach einem der Ansprüche 2 bis 9, sofern nicht auf Anspruch 1 bezogen, bei welchem jede der drei Stufen (41, 42, 43) ein transsonisches Schaufelgitter (40) aufweist.

13. Mantelstromtriebwerk (1) mit einer Niederdruckturbine (4.2) nach einem der vorstehenden Ansprüche, wobei das Mantelstromtriebwerk (1) ein geared turbo fan-Triebwerk ist, aufweisend ein Fan und ein Getriebe, und wobei im Betrieb der Fan, übersetzt durch das Getriebe, mit einer in einem Verhältnis zur Niederdruckturbine geringeren Drehzahl dreht.

14. Mantelstromtriebwerk (1) mit einer Niederdruckturbine (4.2) nach einem der vorstehenden Ansprüche, wobei nur das stromabwärts letzte Schaufelgitter ein transsonisches Schaufelgitter (40) ist; oder wobei mindestens das stromabwärts letzte Schaufelgitter ein transsonisches Schaufelgitter (40) ist; oder das stromabwärts letzte Schaufelgitter und mindestens eines der in Stromrichtung aufwärts direkt benachbarte Schaufelgitter transsonische Schaufelgitter (40) sind;
und/oder wobei die Schaufeln nicht-gekühlte Schaufeln sind.

15. Verwendung einer Niederdruckturbine (4.2) in einem Mantelstromtriebwerk (1) nach einem der vorstehenden Ansprüche, wobei das zumindest eine transsonische Schaufelgitter (40) transsonisch durchströmt wird.
